# EUROPÄISCHE PATENTSCHRIFT

(11) **EP 3 583 058 B1**
(45) Veröffentlichungstag und Bekanntmachung des Hinweises auf die Patenterteilung: **29.10.2025**
(21) Anmeldenummer: 18705369.9
(22) Anmeldetag: 13.02.2018
(51) Int. Cl.: B65G 65/44, B65D 88/54, E01H 10/00

(54) **MOBILER LAGERBEHÄLTER FÜR SCHÜTTGÜTER**
MOBILE STORAGE CONTAINER FOR BULK GOODS
RÉCIPIENT DE STOCKAGE MOBILE DESTINÉ À DES PRODUITS EN VRAC

(30) Priorität: 16.02.2017 DE 102017202505
(43) Veröffentlichungstag der Anmeldung: 25.12.2019
(73) Patentinhaber: Werner GmbH & Co. Strassenreinigung KG, 81829 München (DE)
(72) Erfinder: WERNER, Hans, 81825 München (DE)
(74) Vertreter: Leske, Thomas
(86) Internationale Anmeldenummer: PCT/EP2018/053484
(87) Internationale Veröffentlichungsnummer: WO 2018/149800

(56) Entgegenhaltungen:
- EP-A1- 2 775 036
- EP-A2- 0 678 465
- WO-A1-2006/068620
- WO-A1-2013/011097
- CA-A1- 2 366 273
- CN-U- 203 805 765
- DE-A1- 102008 056 292
- DE-U1- 20 201 638
- DE-U1- 202012 100 389
- US-A- 3 021 025
- -: "Schlammstapel-und Verladesystem in Kompaktbauweise", 23 December 2013 (2013-12-23), XP055468520, Retrieved from the Internet <URL:https://www.huning-anlagenbau.de/files/verladesysteme-03-11_1.pdf> [retrieved on 20180419]

## Beschreibung

Die Erfindung betrifft einen mobilen Lagerbehälter für Schüttgüter in Form einer Behältereinheit, wobei die Behältereinheit derart bemessen ist, dass sie ausnahmegenehmigungsfrei auf öffentlichen Straßen und Plätzen transportierbar ist, so dass der Lagerbehälter ein mobiler Lagerbehälter ist.

Der Lagerbehälter ist dafür vorgesehen, dass ein zu lagerndes Schüttgut, welches vorzugsweise für den Winterdienst Streusalz, Streusplitt oder Streusand sein kann, mobil ist, das bedeutet, dass dieser Lagerbehälter von einem Ort zum anderen transportiert werden kann. Unter Lagerbehälter soll hier im Folgenden ein Behälter verstanden werden, welcher Schüttgut lagert, während ein Transportbehälter ein Behälter ist, mittels welchem Güter von einem Ort zum anderen transportiert werden, woran sich dann ein baldmögliches Ausladen der transportierten Güter anschließt. Bei der vorliegenden Erfindung handelt es sich jedoch um einen Lagerbehälter, in welchem Schüttgüter auch über längere Zeiträume gelagert werden sollen, wobei diese Lagerbehälter zusätzlich mit herkömmlichen Transportmitteln wie LKW ohne Ausnahmegenehmigung auf öffentlichen Straßen und Plätzen transportierbar sein sollen.

Lagerbehälter wie auch Transportbehälter für das tägliche Handling von Schüttgütern sind bekannt. Es existiert eine Vielzahl von Lager- und/oder Transportaufgaben, für welche entsprechende in der Regel für die individuellen Transportaufgaben angepasste Behälter angeboten werden. Besonders die Be- und Entladung der Transportmittel, vor allen Dingen, wenn es sich um Schüttgüter handelt, ist nicht trivial und erfordert möglicherweise auch zusätzliche Zwischenbehälter, und zwar sowohl in Verbindung mit dem Ein- und Ausladen der Schüttgüter als auch bei gegebenenfalls notwenigen Umladevorgängen.

Handelsübliche Container existieren beispielsweise als Abroll- oder Absetzcontainer, genauso wie bezüglich ihrer Maße die ISO-Seecontainer. Zwar weisen diese Container für Schüttgut häufig Austragseinrichtungen auf, welche am Boden der Container angeordnet sind und welche schwerkraftunterstützt das Schüttgut nach unten austragen. Dies passiert unterhalb des am tiefsten liegenden Punktes des Containers in seiner Einsatzlage. Dabei wird bei diesem Arbeitsprinzip des Entleerens für die Container vorausgesetzt, dass die erforderlichen und sich anschließenden Fördereinrichtungen, welche das aus dem Container herabfallende Schüttgut aufnehmen und weitertransportieren, unterhalb des Containers angeordnet sind, dass der Container beim Entleeren so hoch aufgestellt wird, dass eine direkte Übergabe des Schüttgutes in die sich anschließende Nutzeinheit möglich ist oder dass das Schüttgut auf den Boden gekippt wird bzw. der Container auf den Boden entleert wird, so dass eine weitere Maschine wie beispielsweise ein Radlader zur weiteren Beförderung des ausgekippten Schüttgutes erforderlich ist. Die vorzusehenden anschließenden Fördereinrichtungen oder Nutzeinrichtungen sind stationär oder semi-mobil und sind stets getrennt vom eigentlichen Container angeordnet. An der Schnittstelle zwischen Transport, Lagerung und Nutzung der Schüttgüter ergeben sich die größten Probleme für komplett mobile Anlagen.

Zusätzlich ist zu beachten, und dies stellt eine schwerwiegende Limitierung dar, dass die Gewichtsbeschränkung von rollenden Fahrzeugen im öffentlichen Verkehr, und zwar mit Wechselaufbauten oder Containern verschiedenster Bauformen, eine volle Ausnutzung der Kapazität der Container einschränkt. Hier seien als Beispiele Straßenfahrzeuge oder auch Schienenfahrzeuge genannt. Bezüglich der Gewichtslimitierung eines Transportes mit einem für den öffentlichen Verkehr zugelassenen LKW hat ein beispielsweise dreiachsiger LKW ein maximal zulässiges Gesamtgewicht von 26 t, ein Lastzug hat ein maximal zulässiges Gesamtgewicht von 40 t. Daraus ergibt sich unter Abzug des Eigengewichtes der jeweiligen Fahrzeuge für einen dreiachsigen LKW eine maximale Zuladung von 13 t und für einen Lastzug von 25 t. Das Ladevolumen für einen dreiachsigen LKW beträgt bis zu 40 m³, das für einen Lastzug bis zu 100 m³. Diese Zahlenwerte beziehen sich auf die zugelassenen Werte in Deutschland. In anderen Ländern mag es abweichende Zahlen geben. Das bedeutet jedoch, dass bezogen auf die Dichte des zu transportierenden Schüttgutes die Fahrzeuge ihre Behälter, wenn schwere Schüttgüter beladen werden, nicht vollständig füllen können. Man spricht davon, dass die Behälter nicht ausgeladen sind, was bedeutet, dass das gesamte Ladevolumen nicht ausgenutzt werden kann, weil ansonsten das zulässige Gesamtgewicht überschritten würde. Es ergibt sich daher das Problem, dass eine erhebliche Diskrepanz zwischen dem möglichen Ladevolumen von LKW und der damit einhergehenden Zuladung im Sinne des Gewichtes besteht.

Zwar verwenden viele LKW Wechselaufbauten wie z. B. ISO-Container, Wechselpritschen, aber auch Absetz- und Abrollcontainer. Die vorstehend genannten Diskrepanzen zwischen Volumen und Gewicht bestehen bei diesen Wechselaufbauten aber in gleicher Weise. Bei bekannten Containerdiensten wird üblicherweise mit Hilfe von Container-LKW ein Abroll- oder Absetzcontainer zum Kunden gebracht, der diesen befüllt. Anschließend wird dieser wieder vom Container-LKW aufgeladen. Dies ist vor allen Dingen dann problematisch, wenn beim Kunden keine ausreichende Sensibilisierung für die geladenen Mengen herrscht und die Container gewichtsmäßig überfüllt sind. So ist es bereits vorgekommen, dass die Container-LKW nicht einmal in der Lage waren, die überfüllten Container überhaupt zu bewegen.

Daraus ergeben sich weitere Probleme, vor allen Dingen dann, wenn Fahrzeuge für einen Einsatz nicht ausreichend Schüttgut laden können und während des Einsatzes deshalb ständig wieder zum Stützpunkt fahren müssen, um wieder Nachladungen aufzunehmen. Vor allen Dingen für den Winterdienst ist das der Fall, wenn mit relativ kleinen Fahrzeugen schwere Schüttgüter wie z. B. Streusplitt für Straßen und Wege gearbeitet werden muss. Die damit relativ kleinen zu transportierenden Mengen sind rasch aufgebraucht, so dass unter Umständen die Fahrzeiten zurück zum Stützpunkt länger dauern als die eigentlichen Einsatzzeiten. Vor allen Dingen im Winterdienst ist dies problematisch, weil damit das Abstumpfen und/oder Auftauen durch Splitt und/oder Salz der öffentlichen Straßen und Wege mehr Zeit als eigentlich nötig erforderlich ist.

Die am verbreitetsten und marktüblichen Lagerbehälter sind stationäre Hochsilos, welche auf doch beträchtlichen Fundamenten errichtet sind. Trotz der relativ großen Höhe dieser Hochsilos ist das mit diesen Lagern realisierte Beladungsvolumen relativ klein, so dass ein häufiges Nachfüllen erforderlich ist, was sehr häufig durch pneumatische Beförderung des Nachfüllgutes realisiert wird. Die kleinen Ladevolumen haben zudem das Problem, dass vor allen Dingen an Wochenenden oder Feiertagen, wenn die Zulieferer des Schüttgutes nicht liefern, eine kontinuierliche Bereitstellung des Schüttgutes nicht rund um die Uhr gewährleistet ist. Die Betreiber des Hochsilos können dem nur abhelfen, indem eine feste Lagerhalle vorhanden ist, in welcher das Schüttgut aufgeschüttet ist, so dass von dort das Schüttgut auf ein entsprechendes Transportfahrzeug geladen und zu dem Hochsilo zu dessen Auffüllung transportiert werden kann. Die feste Lagerhalle hat somit alle Nachteile eines Zentrallagers in sich vereinigt.

Wie bereits erwähnt, sind die begrenzte Lagerkapazität und die stationäre Anordnung der Lagerbehälter wie der Hochsilos beispielsweise insbesondere von Bedeutung für den Winterdienst.

Die Lagerung von Schüttgut, insbesondere von Streugut, insbesondere von Salz und Splitt für den Winterdienst erfolgt hauptsächlich in Festbauten wie Hallen mit einer Kapazität von mehreren 100 m³ wie auch Hochsilos. Generell unterscheidet man zwischen mobilen Hochsilos von bis zu 10 m³ Lagerungsvolumen und festen Hochsilos mit über 10 m³ Lagerungsvolumen. Darüber hinaus gibt es noch die sogenannten Splittkisten mit einem sehr geringen Volumen, welche in der Regel nur für kleinere Streuflächen wie Gehsteige und ähnliches verwendet werden.

Wenn man für den Winterdienst erforderliches Streumaterial in überdachten Lagerplätzen wie Hallen im Sinne einer trockenen Lagerung vorhält, ist es möglich, quantitativ eine ausreichende Menge an Streugut lagern zu können. Nachteilig dabei ist jedoch, dass die Hallen unbeweglich sind und nicht selten lange Anfahrtswege erforderlich sind, so dass zum Nachfüllen der Streugutbehälter von den Trägerfahrzeugen zunächst relativ lange Leerfahrten erforderlich sind. Je größer das Einsatzgebiet der Winterdienstfahrzeuge oder je weiter entfernt das Einsatzgebiet vom Lager ist, umso länger sind die Leerfahrten zurück zur Stelle, an welcher das Streumaterial gelagert ist, so dass für die immer länger werdenden Leerfahrten auch mehr Zeit erforderlich sind. Es vermindern sich also dadurch effektive Einsatzzeiten der Streufahrzeuge beim Winterdienst. Dies ist vor allen Dingen in der praktischen Realisierung sehr nachteilig, da nach der derzeit gängigen Rechtsprechung eine sogenannte Umlaufzeit von 3 Stunden gewährleistet sein muss.

Bei festen Hochsilos mit über 10 m³ besteht dieses Problem in gleicher Weise. Je größer das Lagerungsvolumen der Hochsilos ist, umso größer ist der Aufwand für Statik und Fundamentausgestaltung, so dass auch hier ein erheblicher zusätzlicher Kostenfaktor zu beachten ist. Wenn Streumaterial im Sinne einer trockenen Lagerung in mobilen Hochsilos wie z. B. beim Einsatz auf Betriebsgeländen, auf Parkplätzen, für Gehwege und Parkanlagen usw. angeordnet werden, besteht zwar der Vorteil, dass diese kleineren mobilen Hochsilos mit einer jeweiligen Silogröße von beispielsweise 3,5 m³; 5 m³ oder 10 m³ Lagerungskapazität an strategisch günstigen Positionen aufgestellt werden können. Die jedoch relativ geringe Lagerkapazität ist bei länger andauernden Winterdienstsicherungseinsätzen, bei welchen in der Regel mehrere Fahrzeuge nacheinander Streumaterial entnehmen möchten, eine relativ häufige Wiederbefüllung erforderlich. Dies kann bei andauernden Schneefällen zu erheblichen Logistikproblemen bei der Befüllung führen mit der Folge, dass Winterdienstarbeiten nicht qualitätsgesichert und nicht in hinreichend kurzer Zeit ausgeführt werden können, was gegebenenfalls für die Betreiber bzw. Ausführenden der Winterdienstarbeiten mit Haftungsproblemen verbunden sein kann.

Außerdem ist zu beachten, dass auch bei den mobilen Silos für die Befüllung bzw. das Nachfüllen ein Spezialgerät erforderlich ist wie z. B. ein LKW mit entsprechendem Ladekran bzw. mit entsprechenden zusätzlichen teuren pneumatisch fördernden Fahrzeugen. Die erforderliche Über-Kopf-Befüllung bei den Hochsilos erfolgt beim Einsatz eines Ladekrans immerhin in einer Höhe von ca. 4,5 bis zu 6,5 m Höhe, je nach Silogröße. Nachteilig ist auch, dass bei der Nachbefüllung es nicht sichtbar ist, ob und inwieweit das Silo bereits gefüllt ist. Dadurch ergeben sich häufig Probleme dergestalt, dass am Ende des Befüllvorganges Splitt neben die Einfüllöffnung entladen wird.

Die Durchführung des Winterdienstes erfolgt hauptsächlich mit LKW, Unimog, Ladog, Tremo und dergleichen, weil diese Trägerfahrzeuge in aller Regel eine Ladefläche für Streugut haben. Eine möglichst große Ladefläche ist für die Mitnahme von Streugut deshalb äußerst wichtig, da im Winterdienst kurze Umlaufzeiten vorgeschrieben sind, in denen nur kurze und eine möglichst geringe Anzahl von Leerfahrten anfallen. Diese genannten Trägerfahrzeuge sind für den Winterdienst in der Anschaffung und im Unterhalt jedoch teuer, vor allem auch weil eine Ganzjahresauslastung teilweise schwer zu realisieren ist. Dies trifft insbesondere bei Unimogs zu. Mit kleineren Fahrzeugen oder Großtraktoren sind die Kosten zwar geringer, und es können diese Fahrzeuge während des ganzen Jahres besser flexibel eingesetzt werden. Das geringe Ladevolumen für Streugut stellt jedoch eine erhebliche Limitierung beim Einsatz dieser kleineren Fahrzeuge dar. Der Vorteil von den großen Geräteträgern besteht gerade in dem großen Ladevolumen für Streugut, was es ermöglicht, mit wenigen Leerfahrten die vorgegebenen kurzen Umlaufzeiten im Winterdienst einzuhalten. Bei den kleineren Winterdienstfahrzeugen fällt wegen der geringen Ladegutmenge an Streugut eine relativ hohe Anzahl von Leerfahrten an.

Aus einem Firmenprospekt HUNING Maschinenbau ist ein Schlammstapel- und Verladesystem in Kompaktbauweise bekannt. Dabei handelt es sich um einen stationär auf einem Fundament und auf einer Aufständerung aufgestellten größeren Behälter, welcher ohnehin von seinen Abmessungen nicht tauglich ist für normalen, ausnahmegenehmigungsfreien Straßenverkehr. Nachteilig an dem bekannten System ist außerdem, dass an diesem Behälter außen Zusatzgeräte wie z. B. eine Hochförderschnecke angebracht sind, was die äußeren Abmessungen weiter vergrößert und daher erst recht lediglich einen stationären Einsatz des bekannten Systems vorschreibt. Die beschriebenen Behälter sind für die Entwässerung von Schlämmen vorgesehen, wobei die Verladeschnecke unterhalb des Unterbodens des Behälters angeordnet ist, so dass dieser Lagerbehälter zwingend auf einem Fundament gelagert und aufgeständert sein muss. Für einen flexiblen Einsatz für Schüttgut, insbesondere im Winterdienst, wenn das Schüttgut Streugut ist, sind derartige stationäre, d. h. nicht-mobile Ladebehälter aus Gründen der Gesamtkosten ausgesprochen nachteilig.

Aus dem Firmenprospekt Tiek Anlagen- und Maschinenbau sind handelsübliche Rollcontainer und aufgeständerte Container bekannt, welche eine solche Aufstellhöhe bezüglich ihres Unterbodens benötigen, dass die Austragsvorrichtung in einem Bereich zumindest teilweise unterhalb des Bodenniveaus angeordnet ist. Dies wird durch Rollen und vorhandene Schienen realisiert, welche jedoch erfordern, dass der Aufstell- bzw. Abstellort derartiger Container auf festem Untergrund erfolgen muss, weil die Schienen ansonsten wegen des hohen Flächendruckes in loses Erdreich ohne weiteres einsinken würden. Dadurch wäre eine ebene Ausrichtung dieser Behälter nicht mehr gewährleistet. Auch bekannt aus diesem Firmenprospekt ist eine Austragsvorrichtung in einem derartigen Behälter in Form eines Schubbodenaustrags. Diese Container werden hauptsächlich für Späne benutzt. Dieser Schubbodenaustrag ist innerhalb des Containers oberhalb des Unterbodens angeordnet. Für den gewollten Einsatzzweck gemäß der vorliegenden Erfindung sind diese Container aber nachteilig.

Des Weiteren ist aus einem Firmenprospekt der Firma FSE Pico/Brandt GmbH ersichtlich, dass Behälter, welche für Biogasanlagen vorgesehen sind und unter Umständen auch Stückgut beinhalten können, sogar insgesamt nicht nur aufgeständert, sondern auf einem definierten Höhenniveau angeordnet werden müssen, und dass die Austragsvorrichtung, welche nach unten austrägt, hoch genug ist, damit aus dem Behälter in einen bzw. auf einen LKW zum Transport des ausgetragenen Schüttgutes gefördert werden kann. Das Dokument EP 0 678 465 A2 offenbart einen mobilen Lagerbehälter zum Bevorraten von Streugut und zum ausnahmegenehmigungsfreien Transport auf öffentlichen Straßen und Plätzen, welcher eine Behältereinheit mit einem geschlossenen Behälter mit Seitenwänden, einem Unterboden und einem oberhalb des Unterbodens angeordneten Zwischenboden aufweist, wobei
a) der Behälter der Behältereinheit eine solche Steifigkeit aufweist, dass der Behälter auch im befüllten Zustand ohne Aufständerung und Fundament auf beliebigem im Wesentlichen ebenem Boden aufstellbar ist,
b) wobei in den Behältern eine Austragsvorrichtung für das Schüttgut und eine Querfördereinrichtung integriert sind, und in die Behältereinheit eine mit der Austragsvorrichtung verbundene Hochfördereinrichtung integriert ist, wobei die Austragsvorrichtung die Querfördereinrichtung aufweist; und c) wobei mittels der Austragsvorrichtung das Schüttgut in einer Austragshöhe aus der Behältereinheit ausgebbar und an die Hochfördereinrichtung übergebbar ist, aus welcher das Schüttgut in einer Abwurfhöhe ausgebbar ist, welche höher als die Austragshöhe liegt.

Die Aufgabe der vorliegenden Erfindung besteht daher darin, einen Lagerbehälter zu schaffen, welcher hinsichtlich seiner Größe derart limitiert ist, dass er in seinen Maximalabmessungen auf entsprechenden für den öffentlichen Transport auf öffentlichen Straßen und Plätzen zugelassene LKWs geeignet ist. Es soll also ein mobiler Lagerbehälter geschaffen werden, welcher zwar als Lagerbehälter zeitweise an einem Einsatzort aufstellbar ist, aus diesem Schüttgut gefördert werden kann, und dieser auch wieder befüllt werden kann, der jedoch bei Beendigung der Arbeiten ohne weiteres an einen neuen Einsatzort gebracht werden kann, so dass insgesamt die Leerfahrten mit den Fahrzeugen vor allen Dingen auch im Winterdienst minimiert werden können.

Diese Aufgabe wird mit einem autarken mobilen Lagerbehälter mit dem Merkmalen gemäß Anspruch 1 gelöst.

Weiterbildungen sind in den jeweils abhängigen Ansprüchen definiert.

Erfindungsgemäß ist ein mobiler Lagerbehälter für Schüttgut in Form einer Behältereinheit ausgebildet, welche derart bemessen ist, d. h. derartige Außenabmaße hat, dass sie ausnahmegenehmigungsfrei auf öffentlichen Straßen und Plätzen transportierbar ist, und zwar mit herkömmlichen LKW bzw. speziell dafür vorgesehenen Fahrzeugen. Des Weiteren weist die Behältereinheit einen Behälter mit Seitenwänden, einem Unterboden, welcher vorzugsweise offen oder geschlossen ist, und einem oberhalb des Unterbodens angeordneten Zwischenboden auf. Vorzugsweise erstreckt sich der Zwischenboden im Wesentlichen planparallel zum Unterboden von einer Seitenwand zur anderen Seitenwand.

Erfindungsgemäß weist der Unterboden bzw. der Behälter eine solche Steifigkeit auf, dass der Behälter auch im befüllten Zustand auf ebenem Boden aufstellbar ist, d. h. dass zum Aufstellen des Behälters weder eine Aufständerung noch ein Fundament erforderlich ist. Sofern der Boden einigermaßen eben ist, kann der Behälter auf beliebigem Boden abgestellt werden. Das kann sandiger Boden sein, das kann Grasboden sein, das kann aber auch asphaltierter oder betonierter oder einfach verfestigter Boden sein. Die Steifigkeit eines derartigen Behälters muss hierfür größer sein als die eines reinen Transportbehälters. Der Unterboden ist hier so gestaltet, dass der Behälter auch bei weichem Untergrund nicht einsinkt und nach der Nutzung wieder vom LKW aufgeladen werden kann. Der Unterboden muss nicht geschlossen ausgeführt sein, aber mit ausreichend großer Grundfläche, um die Flächenpressung soweit zu reduzieren, dass ein Einsinken verhindert wird. In den Behälter sind eine Austragsvorrichtung für das Schüttgut und eine Querfördereinrichtung integriert. Und in die Behältereinheit ist des Weiteren eine mit der Austragsvorrichtung bzw. der Querfördereinrichtung verbundene Hochfördereinrichtung integriert. Mittels der Austragsvorrichtung, gegebenenfalls nach der Querfördereinrichtung, wird das Schüttgut aus der Behältereinheit in einer Austragshöhe ausgegeben und an die Hochfördereinrichtung übergeben. Von der Hochfördereinrichtung ist das Schüttgut in einer Abwurfhöhe ausgebbar, welche höher als die Austragshöhe liegt. Damit ist es möglich, dass zum Entleeren des Behälters zum Zwecke des Beladens eines Fahrzeuges, um das entladene Schüttgut an den Ort zu bringen, an welchem es benötigt wird wie z. B. Streugut auf Straßen und Plätzen für Winterdienste, der Behälter nicht unterfahren werden muss, wie das bei Hochsilobehältern der Fall ist, bzw. ohne dass der Behälter bzw. die Behältereinheit aufgeständert oder auf einem Fundament mit einem definierten Abstand über dem Boden aufgestellt werden muss, um gegebenenfalls vorhandene Aggregate unter dem Boden anzubringen.

Bei der erfindungsgemäßen mobilen Lagerbehälterlösung ist der Unterboden im Wesentlichen auf dem Aufstellort aufliegend, ohne dass Aggregate außen an dem Unterboden dabei störend wären. Vorzugsweise wird als Behälter ein standardisierter Container eingesetzt, welcher speziell in den üblichen genormten Containermaßen ausgeführt ist oder als bestehender Container für die Zwecke eines mobilen Lagerbehälters umgebaut worden ist. Als mobile Lagerbehälter in Form von Containern, d. h. also mobile Container, werden vorzugsweise Abroll- oder Absetzcontainer eingesetzt, welche mit handelsüblichen Fahrzeugaufbauten von Fahrzeugen aufgenommen werden können, durch diese transportiert und von diesen an der Einsatzstelle wieder abgesetzt werden können.

Die Behälter stellen den Hauptteil der Behältereinheit des mobilen Lagerbehälters dar und sind erfindungsgemäß mit einem integrierten Schüttgutaustrag in Form der Austragsvorrichtung versehen. Die Austragsvorrichtung weist die Querfördereinrichtung bzw. hier auch Sammelfördereinrichtung genannt auf, so dass nach Austrag des Schüttgutes in die Sammelfördereinrichtung das Schüttgut mittels der Hochfördereinrichtung auf die Austragshöhe gefördert wird. Unter integrierter Austragsvorrichtung bzw. integrierte Hochfördereinrichtung soll verstanden werden, dass diese erfindungsgemäßen Vorrichtungen des mobilen Lagerbehälters in die Behältereinheit eingebaut sind, so dass die Außenmaße den genormten Containermaßen entsprechen. Sofern die Einrichtungen wie beispielsweise die Hochfördereinrichtung an der Außenseite, d. h. einer Außenwand des Behälters angebracht sind, darf der Behälter jedenfalls nicht größer sein als Behälteraußenmaß plus Anbauvorrichtung gleich maximale Breite oder Länge wie bei einem genormten Container.

Die Austragshöhe, auf welche das Schüttgut mittels der Hochfördereinrichtung gefördert wird, ist dabei so angeordnet, dass es dort von die Austragshöhe unterfahrenden Fahrzeugen direkt übernommen werden kann. Der Vorteil einer derartigen Anordnung besteht darin, dass der Behälter des mobilen Lagerbehälters zum Entleeren nicht schräggestellt werden muss oder dass Öffnungen in den Wänden geöffnet werden müssen. Damit der Lagerbehälter erfindungsgemäß mobil ist, wobei unter Mobilität die Möglichkeit verstanden wird, dass der mobile Lagerbehälter von herkömmlichen Transportfahrzeugen wie LKW aufgenommen und ohne zusätzliche Genehmigung auf den öffentlichen Straßen von einem Einsatzort zum anderen transportiert werden darf, ist dieser bzw. die Behältereinheit so dimensioniert ist, dass alle zulässigen Transportmaße und natürlich Transportgewichte für einen Transport des Lagerbehälters im öffentlichen Raum ohne Sondergenehmigung möglich ist.

Entsprechend dem allgemeinen Aufbau der Behältereinheit ist der Materialfluss, d. h. die Bewegung des Schüttgutes innerhalb der Vorrichtung unter steter Einhaltung aller zulässigen Außenmaße der Behältereinheit für den öffentlichen Straßentransport einschließlich aller integrierten Ein- und Anbauteile zunächst im Wesentlichen horizontal zur Sammeleinrichtung bzw. zur Querfördereinrichtung ausgebildet, wobei dabei das Schüttgut schwerkraftunterstützt in die Sammeleinrichtung bzw. in die Querfördereinrichtung fällt und am Ende der Sammeleinrichtung bzw. die Querfördereinrichtung im Wesentlichen mit einer vertikalen Komponente mittels der Hochfördereinrichtung nach oben gefördert wird, und zwar auf die Austragshöhe, wo das nach oben geförderte Schüttgut an eine Nutz- oder weitere Fördereinrichtung übergeben werden kann. Die Querfördereinrichtung kann ein aktives Förderorgan sein, wie z. B. eine Förderschnecke oder ein Rohrkettenförderer, ist jedoch erfindungsgemäß ein passives Förderorgan in Form eines Trichters, bei dem die Förderung durch die Schwerkraft erfolgt.

Aufgrund der Tatsache, dass der erfindungsgemäße mobile Lagerbehälter mit seinem Unterboden direkt auf dem Boden am Aufstellort abstellbar ist, ist ein sehr platzsparender Aufbau realisierbar. Vor allem sind keine Fundamente, Podeste oder Aufstellrahmen für den Behälter erforderlich. Ebenso wenig sind stationäre Entleerungseinrichtungen erforderlich, weil der mobile Lagerbehälter auch hinsichtlich der Entleerung des Schüttgutes aus seinem Innern in Nutzfahrzeuge autark ist. Die Hochfördereinrichtung kann des Weiteren einen Auslegerarm aufweisen, welcher an der Austragshöhe endet. Der Auslegerarm ist dabei vorzugsweise mit einer solchen Länge ausgebildet, dass Fahrzeuge zur Übernahme des Schüttgutes neben den mobilen Lagerbehälter fahren können und dort das zur Austragshöhe geforderte Schüttgut bequem ohne zusätzliche weitere Fördereinrichtung übernehmen können.

Vorzugsweise ist die Behältereinheit zusätzlich mit einer Beladereinrichtung versehen, beispielsweise in Form eines Schachtes oder einer Schütte, von der aus mit einem zusätzlichen integrierten weiteren Förderaggregat der Behälter mit neuem Schüttgut gefüllt werden kann, um sein Volumen voll auszunutzen und die in dem mobilen Lagerbehälter gelagerte Schüttgutmenge bedarfsweise auf Nutzfahrzeuge zu dessen Verteilung an entsprechende gewünschte Orte zu verteilen. Das zusätzliche Förderaggregat kann separat angetrieben und separat ausgebildet sein; es kann aber auch mit der Hochfördereinrichtung kombiniert sein. Weiter vorzugsweise ist es möglich, dass das Schüttgut im Innern des Behälters der Behältereinheit mittels einer integrierten Verteileinrichtung gleichmäßig verteilt wird. Vorzugsweise kann dies mit der Beladevorrichtung kombiniert ausgeführt sein. Es ist jedoch auch möglich, dass dafür ein separates zusätzliches Aggregat vorgesehen ist.

Mit diesem neuartigen mobilen Lagerbehälter, welcher die Vorteile eines flexiblen Lagers für Schüttgut beinhaltet und autark zur Verteilung des in ihm aufgenommenen Schüttguts ausgerüstet ist, ist der eigentliche Lagerbehälter mit einer wesentlichen weiteren Funktion versehen, nämlich mit der Transportfunktion, um das Lager an beliebige Orte mit einfachen Mitteln, nämlich normalen LKW transportieren zu können. Gleichzeitig ist die Behältereinheit als eine Kombination mit Be- und/oder Entladungsvorrichtung als eine Einheit ausgebildet. Es ist also damit möglich, die Behältereinheit mit handelsüblichen LKW zu gewünschten Anwendungsorten zu transportieren und abzusetzen, so dass eine flexible Lagerhaltung gewährleistet ist. Bisherige zu transportierende Behälter dienten allein dem Transport, waren aber nicht als autark ausgebildete, zahlreiche Funktionen realisierende Behälter, welche für eine Lagerhaltung notwendig sind, ausgerüstet.

Beim Transport des mobilen Lagerbehälters ist das Gewicht des in ihm aufgenommenen Schüttgutes auf das maximale Ladegewicht des LKW beschränkt. In Abhängigkeit von der Dichte des Schüttgutes kann es daher erforderlich sein, dass zum Zwecke des Transportes des mobilen Lagerbehälters dieser nicht komplett befüllt ist. Vielmehr wird eine komplette Befüllung dann am Ort des Aufstellens vorgenommen, so dass die Befüllung von Nutzfahrzeugen wiederum aus einem im Wesentlichen vollgefüllten Lagerbehälter realisiert werden kann. Durch das spätere komplette Auffüllen kann für den Transport das maximal zulässige Gesamtgewicht des LKW eingehalten werden und dennoch für den späteren Einsatz des mobilen Lagerbehälters dessen volle Kapazität zur Verfügung gestellt werden. Hinsichtlich der Flexibilität und Nutzung des mobilen Lagerbehälters stellt dies eine neue Qualität in der Bereitstellung von Schüttgut, insbesondere beispielsweise von Streugut für Winterdienste, dar. Damit ist gewährleistet, dass durch den erfindungsgemäßen mobilen Lagerbehälter vor Ort ohne großen Aufwand ein relativ großer Speicher für Schüttgut vorhanden ist, der zudem flexibel an weitere Orte transportiert werden kann. Vor dem Rücktransport oder dem Transport zu einem anderen Einsatzort ist lediglich sicherzustellen, dass der Behälter der Behältereinheit des mobilen Lagerbehälters soweit entleert ist, dass bei Aufladung auf einen LKW dessen maximal zulässiges Transportgewicht nicht überschritten ist.

Im Behälter der Behältereinheit ist ein Zwischenboden vorgesehen, auf welchem das Schüttgut im Behälter lagert. Die Übergabe des Schüttgutes von der Austragsvorrichtung an die in den Behälter integrierte Hochfördereinrichtung erfolgt im Raum zwischen dem Zwischenboden und dem eigentlichen Behälterboden, d. h. dem Unterboden. Somit existiert kein Bauteil, welches ganz oder teilweise unterhalb des Grundrahmens des Bodens des Behälters bzw. der Behältereinheit angeordnet ist, so dass die Aufstellung auf ebenem Untergrund gewährleistet ist.

Um den Bauraum im Innern des Behälters optimal ausnutzen zu können, kann der Zwischenboden vollständig oder zum Teil auch geneigt ausgeführt werden. Prinzipiell wäre es in einer bevorzugten Weiterbildung auch möglich, dass der Unterboden nicht als durchgehender Boden vorhanden ist, sondern nur ein vom gedachten Unterboden bis zum Zwischenboden angeordneter Stützrahmen vorgesehen ist, auf welchem der Zwischenboden ruht und auf welchem dann beispielsweise eine Austragsvorrichtung angeordnet ist. Prinzipiell ist eine solche Ausbildung der Behältereinheit zwar möglich, schränkt aber mögliche Aufstellorte dergestalt ein, dass dann ein fester Untergrund erforderlich ist, weil auf beispielsweise weichem Untergrund wie sandigem Boden der Behälter mit diesem Stützrahmen in diesen weichen Untergrund einsinken könnte.

Der wesentliche erfindungsgemäße Vorteil mit einem geschlossenen Unterboden besteht gerade darin, dass unterhalb des Unterbodens keinerlei weitere Bauteile angebracht sind, so dass der Behälter an nahezu jeden beliebigen Ort aufgestellt werden kann, ohne dass Fundamente, Podeste oder ähnliches installiert oder vorgesehen sein müssten. Spezielle ansonsten zu erfüllende Anforderungen an Statik oder Prüfstatik für die Handhabung des Behälters entfallen daher, was den Einsatz des erfindungsgemäßen mobilen Lagerbehälters stark flexibilisiert. Wenn die äußere Gestaltung der Behältereinheit derart ist, dass sie den einfachen äußeren Wänden eines üblichen genormten Containers entsprechen, was eine einfache und zuverlässige Handhabung trotz Mobilität für den Transport gewährleistet, kann es vorteilhaft sein, dass alle in den Behälter integrierten Bauteile im Innern angeordnet sind, was jedoch die Lagerkapazität des mobilen Lagerbehälters zwar einschränkt, aber die maximalen Transportmaße gewährleistet, so dass der mobile Lagerbehälter genehmigungsfrei auf öffentlichem Raum von einem Einsatzort zu einem weiteren Einsatzort transportiert werden kann. Um dies zu gewährleisten, kann beispielsweise der Antriebsmotor der Querfördereinrichtung ebenfalls im Behälter untergebracht sein. Dies geht selbstverständlich zu Lasten der Länge der Querfördereinrichtung, d. h. deren Länge muss um die Baulänge des Antriebs kürzer werden. Um nicht zusätzlich das mögliche Lagervolumen im mobilen Lagerbehälter zu verringern, ist die Austragsvorrichtung vorzugsweise im Bereich dieser Unterbrechungen der beispielsweisen Querfördereinrichtung mit entsprechenden blechartigen Abweisern versehen.

Vorzugsweise ist die Hochfördereinrichtung als Hochförderschnecke ausgebildet und ist im Innern des Behälters angeordnet. Gemäß einer Weiterbildung ist die Hochförderschnecke außen am Behälter angebracht. Der Einsatz von Förderschnecken zum Transport von Schüttgut ist besonders effektiv und mit moderaten Antriebsleistungen zu bewerkstelligen. Da der mobile Lagerbehälter als autarker Behälter ausgebildet ist, ist die Optimierung der erforderlichen Antriebsenergie für die jeweiligen integrierten Funktionseinheiten von extremer Bedeutung. Die Querfördereinrichtung heißt Querfördereinrichtung oder auch Sammelfördereinrichtung, weil sie üblicherweise das Schüttgut aus der Austragsvorrichtung sammelt und geometrisch üblicherweise quer zur Öffnung der Austragsvorrichtung angeordnet ist.

Vorzugsweise ist die Austragsvorrichtung als Schub-/Zugboden ausgebildet und weist Leiterholme und Leiterstäbe auf. Die Ausbildung als Schub- oder Zugboden hat den Vorteil, dass dieser auf dem Zwischenboden oder im Bereich des Zwischenbodens angeordnet ist und durch seine hin- und hergehende Bewegung das auf dem Schubboden liegende Schüttgut zur Austragsvorrichtung transportiert. Damit eine zuverlässige Transportierung des Schüttgutes bei der Hin- und Herbewegung des Schubbodens gewährleistet ist, weisen die Leiterstäbe des Schubbodens gleichsinnig angeordnete Keile mit Keilspitzen und Keilendflächen auf, wobei die Spitzen jeweils in die gleiche Richtung zeigen, genauso die Keilendflächen, die alle in die den Keilspitzen entgegengesetzte Richtung zeigen. Diese Keilanordnung hat den Vorteil, dass je nach Bewegungsrichtung des Schubbodens eine Keilendfläche in die jeweilige Bewegungsrichtung das Schüttgut fördert, während die Keilspitzen bei der entsprechenden Bewegungsrichtung in Richtung der Keilspitzen mit geringem Widerstand das Schüttgut über die Keile hinweggleiten lässt. Sofern die Sammeleinrichtung bzw. die Querfördereinrichtung nicht am Ende des Schub-/Zugbodens angeordnet ist, sind die Keile auf der kürzeren Seite des Zwischenbodens denen auf der längeren Seite entgegengesetzt angeordnet. Somit fördert der Schubboden bei Bewegung der längeren Seite in Richtung der Sammeleinrichtung, während er auf der kürzeren Seite unter dem Schüttgut durchgeleitet. Bei Bewegung der längeren Seite entgegen der Richtung der Sammeleinrichtung fördert der Schub-/Zugboden auf der kürzeren Seite, während die längere Seite unter dem Schüttgut durchgleitet.

Weiter vorzugsweise ist die Querfördereinrichtung bzw. die Sammeleinrichtung ebenfalls als Querförderschnecke ausgebildet, wobei die Querförderschnecke im Zwischenboden angeordnet ist. Unter "im Zwischenboden" ist dabei zu verstehen, dass die Querförderschnecke zwischen dem Zwischenboden und dem Unterboden angeordnet ist. Die integrierte Austragsvorrichtung kann neben ihrer Ausbildung als Schub- oder Zugboden auch als Abschiebewand, so genannter Walking-Floor oder als Schnecken- oder Kratzboden ausgebildet sein. Bei einer Ausbildung der Austragsvorrichtung als Schub- oder Zugboden ist dieser vorzugsweise nicht direkt auf dem Zwischenboden angeordnet, sondern ist schwebend angeordnet. Dabei ist der bevorzugte Abstand zwischen dem entsprechenden Boden und dem Schub- oder Zugboden im Bereich zwischen 5 und 10 cm. Die schwebende Ausführung hat darüber hinaus die Vorteile, dass eine geringere Wärmeentwicklung vorhanden ist und der Verschleiß durch Reibung reduziert wird. Des Weiteren sinkt der Kraftaufwand zum Antrieb des Schub- oder Zugbodens, was wiederum für den autarken Betrieb des mobilen Lagerbehälters und einen optimalen Energieverbrauch von Vorteil ist.

Bei vielen Schüttgütern ist es vorteilhaft, dass das Schüttgut nach der in den Behälter integrierten Austragsvorrichtung über eine weitere, ebenfalls in den Behälter integrierte Fördereinrichtung, beispielsweise mittels einer Förderschnecke, gesammelt wird. Diese Sammelfördereinrichtung ist typischerweise unterhalb des Austrags der Austragsvorrichtung, jedoch gemäß der Erfindung ebenfalls über dem Unterboden der Behältereinheit angeordnet. Diese Sammelfördereinrichtung kann auch als Rohrkettenförderer ausgebildet sein.

Für den Fall, dass die Sammelfördereinrichtung nicht am Ende der Austragsvorrichtung angeordnet ist, fördert die Austragsvorrichtung vorzugsweise auf beiden Seiten der Sammelfördereinrichtung jeweils in Richtung dieser Sammelfördereinrichtung. Somit sind in dieser einen Austragsvorrichtung zwei unterschiedliche Förderrichtungen zur Sammelfördereinrichtung vorhanden. Im Falle der Ausführung der Austragsvorrichtung als Schub- oder Zugboden würde dies beispielsweise bedeuten, dass alle steilen Seiten der Leiterstäbe, d. h. der Keilendflächen der Schubkeile, der Sammelfördereinrichtung zugewandt sind. Die Leiterstäbe, d. h. die Schubkeile zwischen dem Zylinder und der Sammelfördereinrichtung, fördern, wenn der Zylinder in Richtung Sammelfördereinrichtung bewegt wird, während die Leiterstäbe hinter der Sammelfördereinrichtung fördern, wenn der Zylinder zurückgezogen wird.

Damit die Sammelfördereinrichtung durch den Druck der darüberliegenden Schüttgutmengen nicht zu stark belastet wird, d. h. zu deren Druckentlastung kann ein dachartiger Steg in ihrer Längsrichtung darübergelegt angeordnet sein. Dieses dachartige Element nimmt die Druckkraft des darüberliegenden Schüttguts auf und leitet es direkt in die Wände ab, beispielsweise auch in den Zwischenboden.

Die Übergabe des Schüttgutes von dieser Sammelfördereinrichtung an die in die Behältereinheit integrierte Hochfördereinrichtung erfolgt vorzugsweise an einem Ende der Sammelfördereinrichtung, kann jedoch beispielsweise auch mittig zu dieser vorgesehen sein. Der Hochfördereinrichtung kann neben ihrer Ausbildung als Hochförderschnecke auch als Kratzkettenförderer, Förderband oder Becherwerk ausgeführt sein. Je nach Bedarf kann die Hochfördereinrichtung an allen Seiten der Behältereinheit angeordnet sein. Sie kann also vorn, hinten, an der linken Seitenwand oder der rechten Seitenwand angeordnet sein. Die Hochfördereinrichtung kann geneigt angebracht bzw. ausgebildet sein. Es ist jedoch auch möglich, dass die Hochfördereinrichtung im Wesentlichen senkrecht an einer Seite des Behälters angebracht oder in einer Seitenwand integriert ist. Sofern die Hochfördereinrichtung als Rohrkettenförderer ausgebildet ist, kann es vorteilhaft sein, den Rohrkettenförderer der Sammeleinrichtung mit dem der Hochfördereinrichtung zu kombinieren und /oder als eine Einheit auszuführen. Bei Ausbildung von Sammeleinrichtung bzw. Querfördereinrichtung und Hochfördereinrichtung als Einheit ist diese Einheit so ausgebildet, dass während des Transportvorganges die Fördereinrichtung änderbar bzw. umkehrbar ist.

Am Austrag der Hochfördereinrichtung ist vorzugsweise eine Schurre angeordnet, mit deren Hilfe die Austragshöhe bzw. der Austragspunkt aus der Hochfördereinrichtung in einen Bereich verlegt werden kann, der für die nachfolgende Nutzung z. B. für Winterdienstfahrzeuge, Streufahrzeuge oder auch stationäre Anlagen direkt zugänglich ist. Es ist vorzugsweise auch möglich, dass die Hochfördereinrichtung sowohl hinter als auch vor dem Behälter abwerfen oder auch links oder rechts oder auch mehrseitig versetzt abwerfen kann. Dies ist gerade deshalb vorteilhaft, da damit auch bei oftmals eingeschränkten räumlichen Verhältnissen eine optimale und variable Funktionalität des Schüttgutaustrags und der Schüttgutübergabe gewährleistet werden kann. Zur Erhöhung der Praktikabilität und Flexibilität des erfindungsgemäßen mobilen Lagerbehälters kann die Hochfördereinrichtung auch in ihrer Neigung verstellbar und ihrer Abwurfrichtung drehbar ausgeführt werden, wobei diese Bewegbarkeit entweder als gesamte Fördereinrichtung möglich ist oder nur durch Drehung der Auswurfschurre realisiert wird. Ebenso kann die Schurre auch mit einem weiteren Förderaggregat wie z. B. einer weiteren Förderschnecke, einem weiteren Rohrkettenförderer oder einem Förderband versehen sein, welches beweglich oder klappbar sein kann, um beispielsweise den horizontalen und / oder vertikalen Förderweg zu verlängern, ohne hierdurch die Abmessungen für den Transport zu erhöhen.

In einer weiteren Ausführung ist schon der Übergabepunkt des Schüttgutes an die Hochfördereinrichtung als bewegliches Gelenk ausgeführt.

Erfindungsgemäß ist im Zwischenboden des Weiteren eine Energieversorgungseinheit für den Antrieb der Austragsvorrichtung, der Querfördereinrichtung und der Hochfördereinrichtung sowie gegebenenfalls vorhandener weiterer Funktionseinheiten angeordnet. Die Energieversorgungseinheit ist also direkt in die Behältereinheit integriert. Die Energieversorgungseinheit ist als Kolbenmotor mit Benzin oder Diesel als Kraftstoff ausgebildet. Die Energieübertragung vom Antriebsmotor zu den verschiedenen Antrieben der verschiedenen Aggregate kann elektrisch, pneumatisch und/oder hydraulisch erfolgen. Bei direkter Kopplung des Antriebsmotors mit einer Hydraulikpumpe ist lediglich ein kleiner Generator in Form beispielsweise einer Lichtmaschine zur Energieversorgung der Steuerung des Weiteren erforderlich. Alternativ ist die Energieversorgungseinheit über die Hydraulik von Fahrzeugen oder über Zapfwellen von Traktoren zu realisieren, für elektrische Kleinverbraucher oder mittels Batterie. In einem solchen Fall wäre der mobile Lagerbehälter nur eingeschränkt autark hinsichtlich seines Betriebs und seiner Gewährleistung aller integrierten Funktionalitäten.

Gemäß einer Weiterbildung ist vorzugsweise zumindest ein Teil des Zwischenbodens mittels eines Antriebs, insbesondere eines zusätzlichen Hydraulikzylinderantriebs, in einem definierten Winkel zur waagerechten Ausgangslage aufstellbar. Damit ist es möglich, schwerkraftbedingt Schüttgut aus dem Bereich, in welchem die Zwischenbodenneigung herstellbar ist, in Richtung auf die Austragsvorrichtung zu fördern. Dies ist beispielsweise dann sinnvoll, wenn ein mobiler Lagerbehälter am Ende einer Nutzungszeit komplett entleert werden soll. Der Vorteil einer derartigen Vorrichtung besteht unter anderem auch darin, dass zur vollständigen Entleerung dann eine Kippung des mobilen Lagerbehälters nicht erforderlich ist. Bei Schüttgütern, die sehr leicht rieseln, d. h. die einen niedrigen Schüttwinkel bilden, kann mit bei Ausführung eines kippbaren Bodens vorteilhaft auf den Einbau eines Schub-/Zugbodens verzichtet werden.

Es ist jedoch des Weiteren gemäß einem weiteren Ausführungsbeispiel vorzugsweise auch möglich, dass in den Unterboden des Behälters ausfahrbare Hydraulikzylinder integriert sind, mittels welcher die komplette Behältereinheit ankippbar ist. Dies ist wiederum eine mögliche Ausgestaltung, welche zur Komplettentleerung der Behältereinheit sinnvoll ist.

Vorzugsweise weist die Behältereinheit am Unterboden Rollen auf Aufnahmeschienen auf, so dass der mobile Lagerbehälter in herkömmlicher Weise durch LKW transportiert und vorher aufgenommen bzw. von diesem abgeladen werden kann, welche ohnehin für den Transport von derartigen Containern, wie sie beispielsweise im Wertstoffbetrieb regelmäßig eingesetzt werden, verwendet werden.

Weiter vorzugsweise ist die Behältereinheit hinsichtlich ihrer Außenmaße für einen Transport auf öffentlichen Straßen und Plätzen ausgebildet wie Abrollcontainer gemäß DIN30722, Absetzcontainer gemäß DIN20720 oder Seecontainer gemäß ISO668 in genormter Ausführung.

Vorzugsweise ist das Schüttgut vor allem bei Winterdiensteinsätzen Streusalz, Streusplitt oder Streusand. Dies stellt einen bevorzugten Anwendungsfall für die mobile Bevorratung von Streugut bei Wintereinsatz dar. Hierbei ist der besondere positive Effekt bzw. Vorteil gegeben, dass Leerfahrzeiten der Trägerfahrzeuge mit einem entsprechenden Streueraufbau bzw. einem Streueranbau oder Streueranhänger deutlich verringert werden kann, so dass die Effizienz des gesamten Fahrzeugflottenbetriebs im Rahmen von vorgegebenen und einzuhaltenden Umlaufzeiten sowie der Reduzierung der Betriebskosten der üblicherweise eingesetzten Trägerfahrzeuge wesentlich verbessert wird. Dadurch, dass der mobile Lagerbehälter an jeden beliebigen Ort transportierbar und dort aufstellbar ist, ohne dass spezielle Fundamentvorkehrungen getroffen werden müssen, bietet sich als wirtschaftlichste und effizienteste Lösung der Einsatz dieser mobilen Lagerbehälter dort an, wo eine zentrale Anfahrstelle für einen Streubereich, d. h. für Streutouren für die Winterstreusand oder Splitt streuenden Fahrzeuge gegeben ist. D. h. die Anordnung oder Abstellung der mobilen Lagerbehälter kann dort erfolgen, wo ein Nachfüllen der Behälter am effektivsten ist, weil die Länge der Versorgungsfahrten diesbezüglich ebenfalls optimierbar sind. Auch dadurch werden kurze Leerfahrten gesichert und die gesamte Effizienz des Streudienstes verbessert.

Da die mobilen Lagerbehälter vor allem auch beim Einsatz von Streugut leicht zu beladen sind und die Befüllung von Streugeräten beispielsweise beim Einsatz von kostengünstigen Traktoren besonders einfach ist, erhöht sich die Flexibilität und Effektivität der erfindungsgemäßen mobilen Lagerbehälter. Am Ende der Einsatzzeit beispielsweise am Ende der Wintersaison werden die mobilen Lagerbehälter mit den handelsüblichen Transportfahrzeugen komplett in einem Stück abtransportiert, wobei dadurch, dass die Austragsvorrichtung und die Hochfördereinrichtung in die Behältereinheit integriert sind, keine Demontage irgendwelcher Anbauteile noch vorher durchzuführen ist. Aufgrund der Tatsache, dass die entsprechenden Funktionseinheiten integriert sind und nach außen nicht überstehen, d. h. keine störenden Objekte darstellen, ist auch gegebenenfalls in großen Hallen eine Stapelung während der Sommersaison und damit eine platzsparende Aufbewahrung ohne Weiteres möglich.

Gemäß einer Weiterbildung ist es auch möglich, zwei Behälter für unterschiedliche Schüttgüter in einem einzigen Behälter, d. h. in einer einzigen Behältereinheit eines mobilen Lagerbehälters zu kombinieren, wie dies beispielsweise bei Streu-LKW der Fall ist. Ein derartiger ZweiKammer-Streuer besteht somit aus einem Behälter für trockenes Streusalz und einem Behälter für Streusplitt. LKW haben zum Streuen von Streusalz häufig bereits einen zweiten Behälter für Sole, um das Streusalz direkt beim Ausbringen mit Sole zu versetzen und die Straßen mit dieser Mischung zu streuen. Dies ist bei dem erfindungsgemäßen Lagerbehälter prinzipiell möglich, wobei natürlich dieses Doppelkammersystem auch direkt beim Streuer angewendet werden kann, so dass vorzugsweise zwei mobile Lagerbehälter für jeweilige Komponenten einer später auszubringenden Streusubstanz bereitgestellt werden können.

Vorzugsweise ist die Behältereinheit des Weiteren mit einer integrierten Steuerung versehen, welche zusätzlich eine bidirektional arbeitende Funkeinrichtung aufweist. Mittels der bidirektionalen Funkeinrichtung wird über die integrierte Steuerung eine Übertragung von gewünschten Parametern des Betriebs des mobilen Lagerbehälters zu einer Zentrale oder einer zentralen Steuerungsanlage und/oder zum Behälter vorzugsweise über Funk vorgenommen. Zu diesen Parametern gehören Füllzustände, Ladegewicht des vorhandenen Schüttgutes im Behälter, Entladungs- oder Beladungsfreigaben, Geschwindigkeit der Entnahme, Geschwindigkeit der Befüllung und ähnliches. Diese Parameter sind sowohl abspeicherbar als auch abfragbar, wobei aus vergangenen Betriebszuständen die entsprechenden Parameter ausgewertet und für gerade laufende Betriebszustände des mobilen Ladebehälters optimale Parameter eingestellt und optimale Betriebsbedingungen eingestellt werden können. Mit Hilfe dieser Daten ist auch eine Nutzung des Schüttgutes von verschiedenen Firmen bzw. Kommunen aus einem Behälter möglich, wobei jeder Nutzer sich am Behälter selbst dann beispielsweise mit einer Chipkarte oder einem Pin identifiziert.

Weiter vorzugsweise weist die Behältereinheit eine Heizeinrichtung zumindest für die Austragsvorrichtung, den Behälter und die Hochfördereinrichtung auf, so dass vor allen Dingen im Winterbetrieb sichergestellt werden kann, dass durch Einfrieren des durchaus eine gewisse Feuchtigkeit aufweisenden Schüttgutes keine Blockierung der Funktionseinheiten des mobilen Ladebehälters vorhanden sind.

Gemäß noch einer Weiterbildung ist die Behältereinheit witterungs- und/oder frostgeschützt und/oder aktiv beheizt ausgebildet, wobei unter witterungsgeschützt insbesondere wasserdicht und/oder frostgeschützt zu verstehen ist. Es ist darüber hinaus außerdem möglich, dass sowohl die Austragsvorrichtung als auch der unmittelbare Lagerbereich im Innern des mobilen Lagerbehälters verkleidet bzw. ausgekleidet, isoliert oder beschichtet ist. Eine derartige Dämmung kann im Sinne einer thermischen Isolierung beispielsweise durch Steinwolle erfolgen. Eine Beschichtung durch Holz, Gummi oder Kunststoff oder auch Textilbeton ist denkbar. Diese Beschichtung dient zum einen einer thermischen Isolierung, trägt aber auch zur Verminderung von Geräuschemissionen bei. Ohne derartige Isolierungen könnte es eintreten, dass beispielsweise ein Streugut in Form von Salz, Splitt oder Granulat, Sand oder Asche bei Kontakt mit kalten Stahloberflächen im Winter durch sich bildendes Tauwasser und Gefrieren dieses Tauwassers verklumpen kann. Vorzugsweise sollte eine innenliegende Beschichtung durch Holz eine Stärke von ca. 5 cm aufweisen. Wenn der mobile Lagerbehälter eine lärmgedämmte Beschichtung hat, ist es ohne Weiteres auch möglich, diesen sogar in Wohngebieten einzusetzen, ohne dass Nutzungsbeschränkungen zu erwarten sind. Ein Frostschutzmittel seiner Beheizung kann beispielsweise elektrisch über die integrierte Energieversorgung erfolgen.

Weitere Vorteile, Details und Anwendungsmöglichkeiten werden nun anhand der nachfolgenden Zeichnung detailliert beschrieben. In der Zeichnung zeigen:
- Figur 1: ein erstes Ausführungsbeispiel eines erfindungsgemäßen mobilen Lagerbehälters in Form eines Streugutcontainers zum Einsatz für den Winterdienst;
- Figur 2: eine Behältereinheit des mobilen Lagerbehälters gemäß Figur 1 in Draufsicht;
- Figur 3: die Behältereinheit des mobilen Lagerbehälters gemäß Figur 1 und Figur 2 als Rückansicht;
- Figur 4: die Behältereinheit des mobilen Lagerbehälters gemäß den Figuren 1 bis 3 als Vorderansicht;
- Figur 5: ein weiteres Ausführungsbeispiel eines mobilen Lagerbehälters in Form eines Streugutcontainers für den Winterdienst;
- Figur 6: die Behältereinheit des mobilen Lagerbehälters gemäß Figur 5 in Draufsicht;
- Figur 7: ein weiteres Ausführungsbeispiel eines mobilen Lagerbehälters mit Ankippvorrichtung;
- Figur 8: a) und b) noch ein weiteres Ausführungsbeispiel eines mobilen Lagerbehälters mit Schubboden auf einem vorgesehenen Zwischenboden und nach unten zur Austrags vorrichtung geneigtem Zwischenbodenabschnitt in Form einer Schütte; und
- Figur 9: noch ein weiteres Ausführungsbeispiel eines mobilen Lagerbehälters mit in einem definierten Winkel anstellbarem Teil des Zwischenbodens der Behältereinheit.

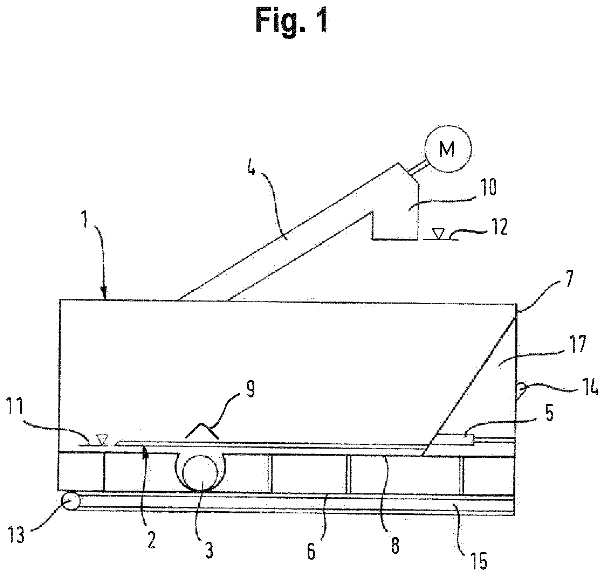

Figur 1 zeigt ein erstes Ausführungsbeispiel eines mobilen Lagerbehälters in Form eines Streugutcontainers in Seitenansicht. Dieser mobile Lagerbehälter weist eine Behältereinheit auf mit einer Austragsvorrichtung in Form eines Schubbodens 2, welcher das Streugut auf Austragshöhe 11 der Austragsvorrichtung zu einer Sammeleinrichtung fördert, welche bei diesem Ausführungsbeispiel als Querförderschnecke 3 ausgebildet ist. Über der Querförderschnecke 3 ist eine Abdeckhaube 9 angeordnet, welche die Querförderschnecke 3 vom Gewicht des im mobilen Lagerbehälter vorhandenen Streuguts schützt, wodurch kein übermäßiges Gewicht des Streugutes auf der Querförderschnecke 3 lastet. Die Querförderschnecke 3 fördert das Streugut zu einer Hochfördereinrichtung 4, welche ebenfalls als Förderschnecke ausgeführt ist. Von der Hochfördereinrichtung gelangt das Streugut zur Auswurfhöhe 12 bzw. Abwurfhöhe, und zwar über eine Auswurfschurre 10, von wo aus das dorthin geförderte Streugut in ein unter der Auswurfschurre angeordnetes Streugutfahrzeug fällt, was hier der Einfachheit der Darstellung wegen nicht gezeigt ist.

Die Hochförderschnecke 4 ist bei diesem Ausführungsbeispiel an der Seite des Behälters 1 der Behältereinheit des mobilen Lagerbehälters angeordnet. Die Bewegung des Schubbodens 2 erfolgt über einen Hydraulikzylinder 5. Dadurch, dass die Abwurfhöhe 12 der Hochfördereinrichtung 4 oberhalb der Austragshöhe 11 der Austragsvorrichtung liegt, ist es möglich, dass der mobile Lagerbehälter mit seiner Unterseite bzw. seinem Unterboden, an welchem allenfalls Stabilisierungsschienen 15 angeordnet sind, auf einigermaßen ebenem Boden unterschiedlichster Beschaffenheit abgesetzt werden kann, ohne dass ein Fundament oder eine Aufständerung für den Lagerbehälter gebaut werden müsste, und ist es auch möglich, diesen Behälter leicht ohne Umbauten oder Montagen an einen anderen Einsatzort mittels handelsüblicher LKW oder anderer Transportfahrzeuge auf öffentlichen Straßen und Plätzen zu transportieren. Mittels der zum mobilen Lagerbehälter gehörenden Hochfördereinrichtung aus dem Lagerbehälter kann das Streugut in Streufahrzeuge übergeben werden. Die Behältereinheit selbst weist an ihrem Unterboden zwei Rollen 13 und Aufnahmeschienen 15 auf. Dadurch ist der Unterboden 6 zusätzlich stabilisiert. Der Schubboden 2 bewegt sich auf dem Zwischenboden 8. Im Raum zwischen dem Unterboden 6 und dem Zwischenboden 8 ist die Querförderschnecke 3 angeordnet.

Oberhalb des Zwischenbodens 8 und seitlich durch die Wände 7 begrenzt ist das Schüttgut gelagert. An der Vorderseite der Behältereinheit 1 befindet sich ein Haken 14 des Abrollcontainers, über welchen die Aufnahme und der Transport mit einem LKW erfolgt. Der Versorgungsraum 17 wird zusätzlich zur Unterbringung eines Schaltschrankes sowie einer nicht erfindungsgemäßen gegebenenfalls vorgesehenen Energieversorgung wie beispielsweise eines Stromerzeugungsaggregrates und/oder Hydraulikaggregates genutzt.

Ein wesentlicher Vorteil dieses mobilen Lagerbehälters gegenüber herkömmlichen Transportbehältern oder herkömmlichen stationären Lagerbehältern besteht darin, dass der Lagerbehälter sämtliche Funktionsaggregate integriert hat und dadurch sehr flexibel einsetzbar ist. Darüber hinaus ist der mobile Lagerbehälter in seinen Abmessungen derart gestaltet, dass er das Maß genormter Container nicht übersteigt und somit problemlos und ohne Ausnahmegenehmigung im öffentlichen Straßenverkehr von einem Einsatzort zu einem zweiten transportiert werden kann. Damit hat der eigentliche Lagerbehälter eine Doppelfunktion, nämlich zum einen die Funktion des Lagers des Streugutes beispielsweise für Winterdienstaufgaben und zum zweiten die Mobilität bzw. der Transport des Lagerbehälters ohne Montage oder Demontage eventuell angebauter Vorrichtungen von einem Einsatzort zum anderen. Diese Doppelfunktion ist bisher so nicht realisiert worden, weil Transportbehälter nicht Funktionalitäten integriert haben, da sie lediglich zum Transport von bestimmten Gütern von einem Ort A zu einem Ort B vorgesehen sind, wohingegen bekannte Lagerbehälter stationär aufgestellt werden und demzufolge ein Fundament oder eine Aufständerung benötigen, damit diese lediglich als Lager dienenden Behälter auch entsprechend entleert werden können, und zwar in dem Sinne, dass das im Behälter gelagerte Schüttgut an Einsatzfahrzeuge übergeben werden kann.

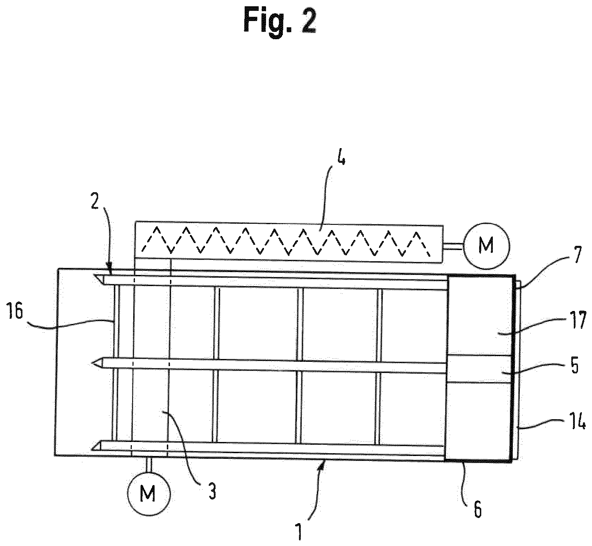

Figur 2 zeigt die Behältereinheit 1 gemäß Figur 1 in Draufsicht. Oberhalb des Unterbodens 6 liegt der Hydraulikzylinder 5, der den Schubboden 2 bewegt. Der Schubboden 2 schiebt das Streugut zur Querförderschnecke 3, welche es weiter zur Hochförderschnecke 4 fördert. An der Vorderseite 7 des Behälters der Behältereinheit 1 des mobilen Lagerbehälters ist ein Haken 14 für den Transport angeordnet. Die letzte Strebe 16 des Schubbodens 2 weist eine entgegengesetzte Förderrichtung auf, damit das Streugut an der Rückwand der Behältereinheit 1 nicht verpresst wird.

Außerdem ist der Versorgungsraum 17 dargestellt, in welchem eine Steuereinheit und/oder eine Energieversorgungseinheit angeordnet sind bzw. sein können. Dadurch, dass sämtliche Funktionsaggregate in die Behältereinheit des mobilen Lagerbehälters integriert sind, hat der erfindungsgemäße mobile Lagerbehälter eine hohe Flexibilität seines Einsatzes und ist außerdem hinsichtlich der Realisierung der für das Betreiben dieses Lagerbehälters erforderlichen Funktionen autark.

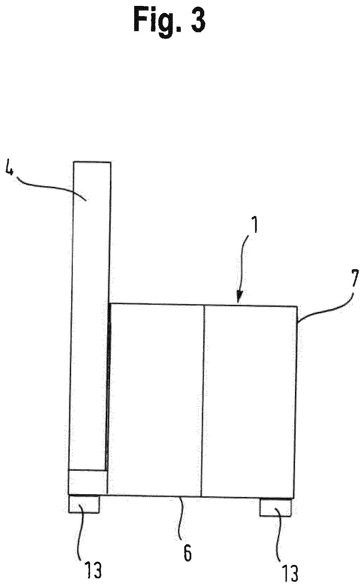

Figur 3 zeigt den mobilen Lagerbehälter gemäß Figur 1 und 2 in Rückansicht. An der Rückseite des Behälters der Behältereinheit 1 ist eine Tür angeordnet, welche geöffnet werden kann, um in das Innere des Behälters der Behältereinheit 1 zu gelangen. Die Rollen 13 der Behältereinheit 1 sind am Unterboden 6 befestigt, wodurch der mobile Lagerbehälter insgesamt mobiler und flexibler in seinem Einsatz ist. Die Hochförderschnecke 4 ist, wie bei dem Ausführungsbeispiel in Figur 1 gezeigt, an der seitlichen Wand 7 des Behälters angebracht.

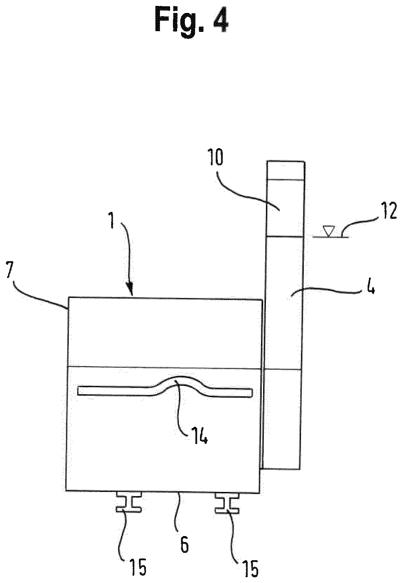

Figur 4 schließlich zeigt das Ausführungsbeispiel gemäß den Figuren 1 bis 3 in Vorderansicht. Die Behältereinheit 1 hat an der Außenseite der Behälterseitenwand 7 einen Haken 14 und am Unterboden 6 Aufnahmeschienen 15, welche beide für den Transport mit einem LKW genutzt werden und darüber hinaus eine zusätzliche Stabilität am Unterboden 6 der Behältereinheit schaffen. In Figur 4 ist erkennbar, das die Hochförderschnecke 4 an der Seite der Behältereinheit außen angebracht ist, über welche das Streugut über die Auswurfschurre 10 in ein nicht dargestelltes Streufahrzeug gefördert wird. Die Auswurf- bzw. Abwurfhöhe 12 ist ebenfalls prinzipiell eingezeichnet und liegt deutlich über der Austragshöhe von der Austragsvorrichtung, welche im Innern des Behälters der Behältereinheit 1 des mobilen Lagerbehälters angeordnet ist. Die Hochförderschnecke 4 ist bei diesem Ausführungsbeispiel klappbar ausgeführt, um die zulässige Höhe für den Straßentransport einzuhalten.

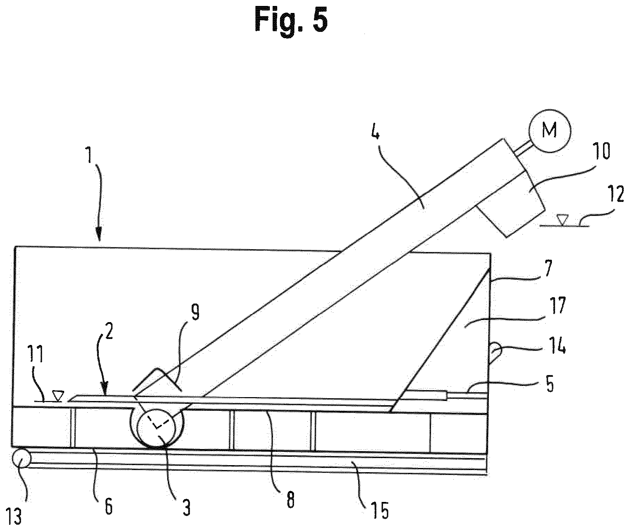

In Figur 5 ist ein weiteres Ausführungsbeispiel eines mobilen Lagerbehälters wie beispielsweise auch eines Streugutbehälters 1 gezeigt. Bei diesem Ausführungsbeispiel fördert die Hochförderschnecke 4 aus dem Mittelbereich des mobilen Lagerbehälters mittels einer Querförderschnecke 3 das Streugut. Ein Hydraulikzylinder 5 bewegt den Schubboden 2, welcher auf dem Zwischenboden 8 angeordnet ist. Dieser Schubboden 2 fördert das Streugut zur Querförderschnecke 3. Bei dieser Ausgestaltung fördern die beiden Hälften der Querförderschnecke 3 das Streugut jeweils zur Mitte und nicht wie in Figur 1 zu einer ausgewählten Seite. Von der Mitte der Querförderschnecke 3 fördert die Hochförderschnecke 4 über die Auswurfschurre 10 das Streugut in ein hier nicht dargestelltes Streufahrzeug. Der Haken 14, welcher an der Vorderseite 7 des Behälters befestigt ist, sowie die am Unterboden 6 befestigten Rollen 13 und auch die Aufnahmeschienen 15 sind für den Transport des mobilen Lagerbehälters mit einem normalen LKW vorgesehen, welcher für den Transport von Behältern oder Containern ausgelegt ist. Die Hochförderschnecke 4 ist hier drehbar ausgeführt und kann beim Transport in den Bereich der Vorderwand 7 abgesenkt werden.

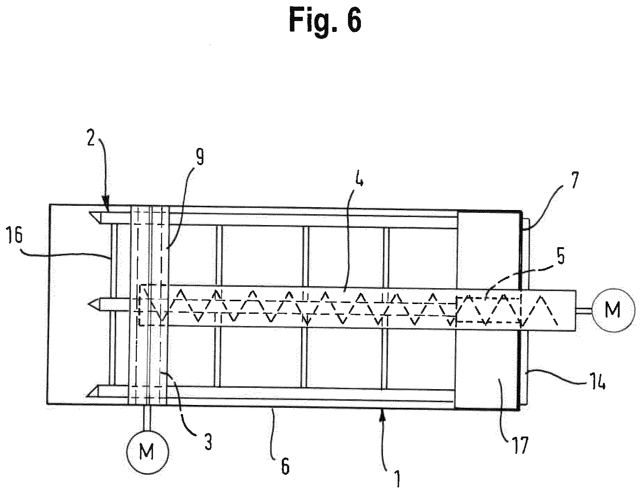

Figur 6 zeigt den mobilen Lagerbehälter mit seiner Behältereinheit 1 gemäß Figur 5 in Draufsicht. Über dem Unterboden 6 ist der Hydraulikzylinder 5 angeordnet, welcher den Schubboden 2 bewegt. Der Schubboden 2 schiebt das Streugut zur Förderschnecke 3, welche unterhalb des Zwischenbodens (in dieser Figur nicht eingezeichnet) angeordnet ist und das Streugut weiter zur Hochförderschnecke 4 fördert. Die Hochförderschnecke 4 fördert bei diesem Ausführungsbeispiel von der Mitte der Behältereinheit aus in das nicht dargestellte Streufahrzeug. An der Vorderseite 7 der Behältereinheit ist der Haken 14 für den Transport sichtbar. Die letzte Strebe 16 des Schubbodens 2 hat eine entgegengesetzte Förderrichtung, damit ein Verpressen des Streuguts an der Rückwand des Behälters des mobilen Lagerbehälters vermieden werden kann. Die Querförderschnecke 3 ist in dieser Darstellung nicht sichtbar, da über ihr die Abdeckhaube 9 (siehe beispielsweise Figur 5) angeordnet ist.

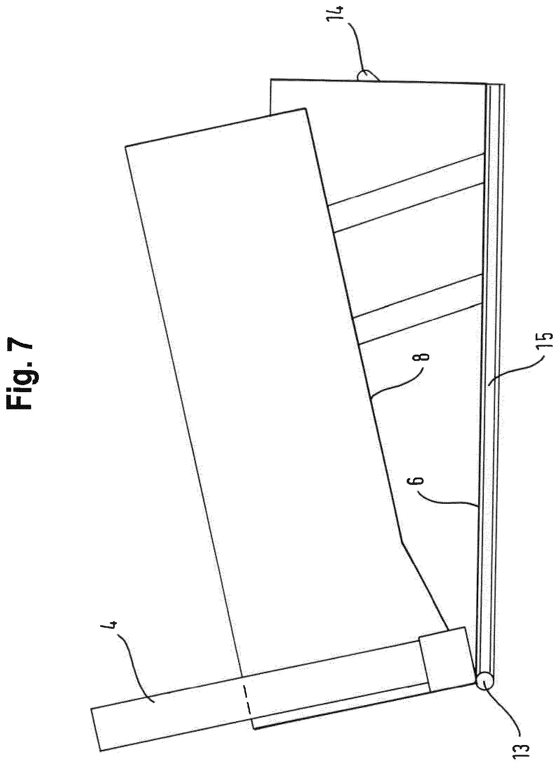

Bei dem in Figur 7 dargestellten Ausführungsbeispiel sind zwischen den Aufnahmeschienen des Behälters bzw. der Behältereinheit und dem eigentlichen Unterboden 6 ausfahrbare und einfahrbare Hydraulikzylinder angeordnet, mittels welcher der gesamte Behälter in eine geneigte Position gebracht werden kann, damit auf dem Zwischenboden gegebenenfalls noch vorhandenes Schüttgut bzw. Streugut zur Seite in die Schütte und von dort über die Austragsvorrichtung in die Sammeleinrichtung gefördert werden kann, von welcher das Streugut mit der Hochfördereinrichtung zur Abwurfhöhe 10 gefördert werden kann.

Es ist aber auch möglich, dass die Hydraulikzylinder zwischen dem Unterboden 6 und dem Zwischenboden 8 angeordnet sind, so dass bei einer Anhebbewegung des Behälters mittels der Hydraulikzylinder der Zwischenboden 8 mitsamt dem darüberliegenden Behälter in eine Kippposition gebracht wird. An der Vorderseite 7 der Behältereinheit ist wiederum der Haken 14 dargestellt.

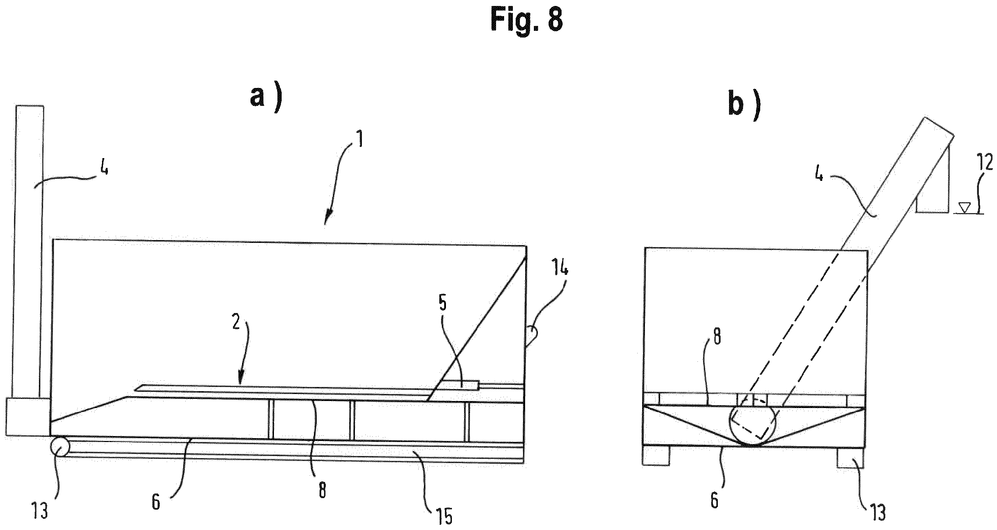

Bei dem Ausführungsbeispiel gemäß Figur 8 ist in der Seitenansicht a) und in der Queransicht b) mit Blickrichtung in Längsrichtung der Behältereinheit 1 ein im mobilen Lagerbehälter vorgesehener Zwischenboden 8 eingezeichnet, auf welchem ein Schubboden 2 antreibbar mittels des Hydraulikzylinders 5 zur Förderung des Streugutes vom Zwischenboden in die Schütte in Richtung auf die Sammeleinrichtung gefördert werden kann. Die Sammeleinrichtung ist hier als Trichter ohne aktives Förderorgan dargestellt. Am Unterboden 6 sind die Aufnahmeschienen 15 und die Rollen 13 des Abrollcontainers ebenfalls dargestellt. Bei diesem Ausführungsbeispiel ist die Hochfördereinrichtung 4 an der Rückseite der Behältereinheit angebaut. In der Queransicht ist erkennbar, dass an dem Ende, an welchem die Hochfördereinrichtung 4 angeordnet ist, das Streugut in eine Schütte verbracht wird, von welcher es mit der Hochfördereinrichtung zur Auswurfhöhe 12 gefördert werden kann.

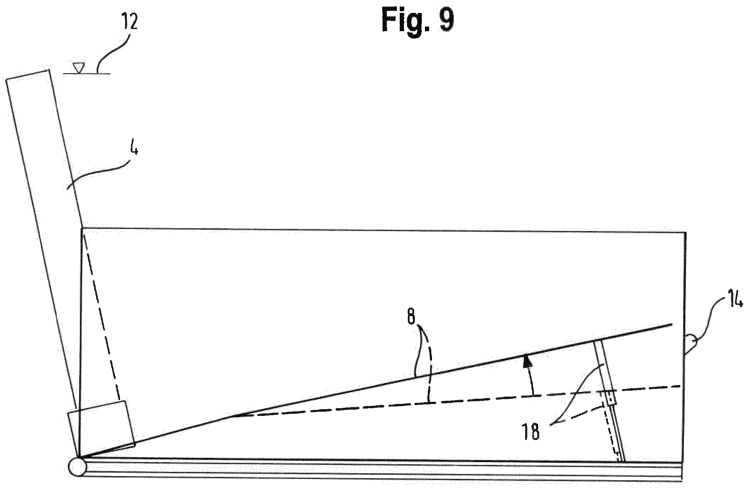

Und schließlich ist in Figur 9 noch ein weiteres Ausführungsbeispiel dargestellt, bei welchem gezeigt ist, dass der Zwischenboden 8 geteilt ausgebildet sein kann und ein Teil des Zwischenbodens mittels eines zusätzlichen Hydraulikzylinders in eine geneigte Position gebracht werden kann, so dass gegebenenfalls vorhandene geringere Mengen von Streugut schwerkraftbedingt in Richtung auf die Sammeleinrichtung gefördert werden können, von welcher aus das Streugut mit der Hochfördereinrichtung zur Auswurfhöhe 12 gefördert werden kann. Dies ist insbesondere bedeutsam, wenn der mobile Lagerbehälter möglichst komplett geleert werden soll.

### Bezugsziffernliste

- 1: Behältereinheit
- 2: Schubboden
- 3: Querförderschnecke
- 4: Hochförderschnecke
- 5: Hydraulikzylinder Schub- / Zugboden
- 6: Unterboden
- 7: Behälterwände/Vorderwand
- 8: Zwischenboden
- 9: Abdeckhaube
- 10: Auswurfschurre
- 11: Abwurfhöhe des Schubbodens
- 12: Abwurfhöhe der Hochfördereinrichtung/Hochförderschnecke
- 13: Rollen des Abrollbehälters
- 14: Haken des Abrollbehälters
- 15: Aufnahmeschienen des Behälters
- 16: Gegenläufige Strebe des Schubbodens
- 17: Versorgungsraum
- 18: Hydraulikzylinder Zwischenboden

## Patentansprüche

1. Autarker mobiler Lagerbehälter zum Bevorraten von Streugut und zum ausnahmegenehmigungsfreien Transport auf öffentlichen Straßen und Plätzen, welcher eine Behältereinheit mit einem geschlossenen Behälter mit Seitenwänden (7), einem Unterboden (6) und einem oberhalb des Unterbodens (6) angeordneten Zwischenboden (8) aufweist, **dadurch gekennzeichnet, dass**
a) der Behälter (1) der Behältereinheit eine solche Steifigkeit aufweist, dass der Behälter auch im befüllten Zustand ohne Aufständerung und Fundament auf beliebigem im Wesentlichen ebenem Boden aufstellbar ist,
b) wobei in den Behältern eine Austragsvorrichtung für das Schüttgut und eine Querfördereinrichtung (3) integriert sind, und in die Behältereinheit (1) eine mit der Austragsvorrichtung verbundene Hochfördereinrichtung (4) integriert ist, wobei die Austragsvorrichtung die Querfördereinrichtung (3) aufweist;
c) wobei mittels der Austragsvorrichtung das Schüttgut in einer Austragshöhe (11) aus der Behältereinheit ausgebbar und an die Hochfördereinrichtung (4) übergebbar ist, aus welcher das Schüttgut in einer Abwurfhöhe (12) ausgebbar ist, welche höher als die Austragshöhe (11) liegt und
d) wobei im Zwischenboden eine Energieversorgungseinheit für den Antrieb der Austragsvorrichtung, der Querfördereinrichtung und der Hochfördereinrichtung angeordnet ist.

2. Autarker mobiler Lagerbehälter nach Anspruch 1, **dadurch gekennzeichnet, dass** die Hochfördereinrichtung eine Hochförderschnecke ist und außen am Behälter angeordnet ist.

3. Autarker mobiler Lagerbehälter nach Anspruch 1 oder 2, **dadurch gekennzeichnet, dass** die Austragsvorrichtung als Schub-/Zugboden (2) ausgebildet ist und Leiterholme und Leiterstäbe aufweist.

4. Autarker mobiler Lagerbehälter nach Anspruch 3, **dadurch gekennzeichnet, dass** zwischen dem Schubboden und dem Zwischenboden ein Abstand, insbesondere von mindestens 5 cm, besteht.

5. Autarker mobiler Lagerbehälter nach einem der Ansprüche 1 bis 4, **dadurch gekennzeichnet, dass** die Querfördereinrichtung (3) als Querförderschnecke oder Rohrkettenförderer ausgebildet und im Zwischenboden (8) angeordnet ist.

6. Autarker mobiler Lagerbehälter nach einem der Ansprüche 1 bis 5, **dadurch gekennzeichnet, dass** die Behältereinheit (1) am Unterboden (6) Rollen auf Aufnahmeschienen aufweist.

7. Autarker mobiler Lagerbehälter nach einem der Ansprüche 1 bis 6, **dadurch gekennzeichnet, dass** zumindest ein Teil des Zwischenbodens (8) mittels eines Antriebs, insbesondere eines Hydraulikzylinderantriebs, in einem definierten Winkel zur waagerechten Ausgangslage aufstellbar ist.

8. Autarker mobiler Lagerbehälter nach einem der Ansprüche 1 bis 7, **dadurch gekennzeichnet, dass** aus dem Unterboden (6) des Behälters ausfahrbare Hydraulikzylinder in den Unterboden (6) integriert sind, mittels welcher die Behältereinheit (1) ankippbar ist.

9. Autarker mobiler Lagerbehälter nach einem der Ansprüche 1 bis 8, **dadurch gekennzeichnet, dass** die Behältereinheit (1) hinsichtlich ihrer Außenmaße für einen Transport auf öffentlichen Straßen und Plätzen wie Abrollcontainer gemäß DIN 30722, Absetzcontainer gemäß DIN 20720 oder Seecontainer gemäß ISO 668 genormt ist.

10. Autarker mobiler Lagerbehälter nach einem der Ansprüche 1 bis 9, **dadurch gekennzeichnet, dass** das Streugut Streusalz, Streusplitt oder Streusand ist.

11. Autarker mobiler Lagerbehälter nach einem der Ansprüche 1 bis 10, **dadurch gekennzeichnet, dass** die Behältereinheit (1) mit einer bidirektional arbeitenden Funkeinrichtung versehen ist, mittels welcher Füllzustände, Entladungs- oder Beladungsfreigaben übermittelbar und/oder abfragbar und/oder steuerbar sind.

12. Autarker mobiler Lagerbehälter nach einem der Ansprüche 1 bis 11, **dadurch gekennzeichnet, dass** die Behältereinheit (1) eine Heizeinrichtung zumindest für die Austragsvorrichtung, den Behälter und die Hochfördereinrichtung (4) umfasst.

13. Autarker mobiler Lagerbehälter nach einem der Ansprüche 1 bis 12, **dadurch gekennzeichnet, dass** die Behältereinheit (1) witterungsgeschützt, insbesondere wasserdicht, und/oder frostgeschützt ausgebildet ist.

## Claims

1. Autonomous mobile storage container for storing spreading material and for exemption-free transport on public roads and squares, having a container unit with a closed container that has side walls (7), a subfloor (6) and an intermediate floor (8) arranged above the subfloor (6), **characterized in that**
a) the container (1) of the container unit has such a stiffness that the container is able to be set up on any substantially flat ground without a stand and a foundation, even in the filled state,
b) wherein a discharge device for the bulk material and a transverse conveyor (3) are integrated in the containers, and an elevating conveyor (4) connected to the discharge device is integrated in the container unit (1), wherein the discharge device has the transverse conveyor (3);
c) wherein, by means of the discharge device, the bulk material is able to be discharged from the container unit at an discharge height (11) and transferred to the elevating conveyor (4), from which the bulk material is able to be discharged at an expulsion height (12) that is greater than the discharge height (11), and
d) wherein an energy supply unit for the driving of the discharge device, of the transverse conveyor and of the elevating conveyor is arranged in the intermediate floor.

2. Autonomous mobile storage container according to Claim 1, **characterized in that** the elevating conveyor is an elevating conveying screw and is arranged on the outside of the container.

3. Autonomous mobile storage container according to Claim 1 or 2, **characterized in that** the discharge device is designed as a push/pull floor (2) and has ladder stiles and ladder bars.

4. Autonomous mobile storage container according to Claim 3, **characterized in that** there is a spacing, in particular of at least 5 cm, between the push floor and the intermediate floor.

5. Autonomous mobile storage container according to one of Claims 1 to 4, **characterized in that** the transverse conveyor (3) is designed as a transverse conveying screw or tube chain conveyor and is arranged in the intermediate floor (8).

6. Autonomous mobile storage container according to one of Claims 1 to 5, **characterized in that**, on the subfloor (6), the container unit (1) has rollers on receiving rails.

7. Autonomous mobile storage container according to one of Claims 1 to 6, **characterized in that** at least a part of the intermediate floor (8) is able to be set up at a defined angle to the horizontal starting position by means of a drive, in particular a hydraulic cylinder drive.

8. Autonomous mobile storage container according to one of Claims 1 to 7, **characterized in that** hydraulic cylinders able to be extended from the subfloor (6) of the container are integrated in the subfloor (6), by means of which hydraulic cylinders the container unit (1) is able to be tilted.

9. Autonomous mobile storage container according to one of Claims 1 to 8, **characterized in that**, with regard to its outer dimensions, the container unit (1) meets the standards for transport on public roads and squares, such as for roller containers according to DIN 30722, skip containers according to DIN 20720 or sea containers according to ISO 668.

10. Autonomous mobile storage container according to one of Claims 1 to 9, **characterized in that** the spreading material is road salt, grit or spreading sand.

11. Autonomous mobile storage container according to one of Claims 1 to 10, **characterized in that** the container unit (1) is provided with a bidirectional radio device by means of which fill states and enabling of discharge or loading are able to be transmitted and/or retrieved and/or controlled.

12. Autonomous mobile storage container according to one of Claims 1 to 11, **characterized in that** the container unit (1) comprises a heater at least for the discharge device, the container and the elevating conveyor (4).

13. Autonomous mobile storage container according to one of Claims 1 to 12, **characterized in that** the container unit (1) is weather-protected, in particular waterproof, and/or frost-protected.

## Revendications

1. Contenant de stockage mobile autonome pour le stockage d'articles à disperser et pour le transport sans autorisation spéciale sur des routes et places publiques, lequel comporte un ensemble de contenants avec un contenant fermé avec des parois latérales (7), un fond inférieur (6) et un fond intermédiaire (8) disposé au-dessus du fond inférieur (6), **caractérisé en ce que**
a) le contenant (1) de l'ensemble de contenants présente une rigidité telle que le contenant peut être placé sur un sol quelconque sensiblement plat sans support et sans fondation même dans l'état rempli,
b) un dispositif d'évacuation pour les articles en vrac et un système de transport transversal (3) étant intégrés dans les contenants et un système de transport vertical (4) relié au dispositif d'évacuation étant intégré dans l'ensemble de contenants (1), le dispositif d'évacuation comportant le système de transport transversal (3) ;
c) le dispositif d'évacuation permettant de distribuer les articles en vrac depuis l'ensemble de contenants à une hauteur d'évacuation (11) et de les transférer au système de transport vertical (4), depuis lequel les articles en vrac peuvent être distribués à une hauteur de déchargement (12) qui est plus haute que la hauteur d'évacuation (11), et
d) une unité d'alimentation en énergie pour l'entraînement du dispositif d'évacuation, du système de transport transversal et du système de transport vertical étant disposée dans le fond intermédiaire.

2. Contenant de stockage mobile autonome selon la revendication 1, **caractérisé en ce que** le système de transport vertical est une vis sans fin de transport vertical et est disposé à l'extérieur sur le contenant.

3. Contenant de stockage mobile autonome selon la revendication 1 ou 2, **caractérisé en ce que** le dispositif d'évacuation est réalisé comme un fond de poussée/de traction (2) et comporte des montants d'échelle et des barreaux d'échelle.

4. Contenant de stockage mobile autonome selon la revendication 3, **caractérisé en ce qu'**il existe une distance, en particulier d'au moins 5 cm, entre le fond de poussée et le fond intermédiaire.

5. Contenant de stockage mobile autonome selon l'une des revendications 1 à 4, **caractérisé en ce que** le système de transport transversal (3) est réalisé comme une vis sans fin de transport transversal ou comme un transporteur à chaîne tubulaire et est disposé dans le fond intermédiaire (8).

6. Contenant de stockage mobile autonome selon l'une des revendications 1 à 5, **caractérisé en ce que** l'ensemble de contenants (1) comporte sur le fond inférieur (6) des rouleaux sur des rails de réception.

7. Contenant de stockage mobile autonome selon l'une des revendications 1 à 6, **caractérisé en ce qu'**au moins une partie du fond intermédiaire (8) peut être placée selon un angle défini par rapport à la position de départ horizontale au moyen d'un entraînement, en particulier d'un entraînement à vérin hydraulique.

8. Contenant de stockage mobile autonome selon l'une des revendications 1 à 7, **caractérisé en ce que** sont intégrés dans le fond inférieur (6) des vérins hydrauliques pouvant être déplacés hors du fond inférieur (6) du contenant, au moyen desquels l'ensemble de contenants (1) peut être basculé.

9. Contenant de stockage mobile autonome selon l'une des revendications 1 à 8, **caractérisé en ce que** l'ensemble de contenants (1) est normé quant à sa dimension extérieure pour un transport sur des routes et places publiques comme des conteneurs roulants selon la norme DIN 30722, des conteneurs amovibles selon la norme DIN 20720 ou des conteneurs maritimes selon la norme ISO 668.

10. Contenant de stockage mobile autonome selon l'une des revendications 1 à 9, **caractérisé en ce que** les articles à disperser sont du sel à disperser, du gravier à disperser ou du sable à disperser.

11. Contenant de stockage mobile autonome selon l'une des revendications 1 à 10, **caractérisé en ce que** l'ensemble de contenants (1) est pourvu d'un système radio à fonctionnement bidirectionnel, qui permet de transférer et/ou de consulter et/ou de commander des états de remplissage, des approbations de déchargement ou de chargement.

12. Contenant de stockage mobile autonome selon l'une des revendications 1 à 11, **caractérisé en ce que** l'ensemble de contenants (1) comprend un système de chauffage au moins pour le dispositif d'évacuation, le contenant et le système de transport vertical (4).

13. Contenant de stockage mobile autonome selon l'une des revendications 1 à 12, **caractérisé en ce que** l'ensemble de contenants (1) est protégé des intempéries, en particulier est imperméable et/ou protégé contre le gel.
